(19) Europäisches Patentamt / European Patent Office / Office européen des brevets

(11) **EP 2 193 316 B1**

(12) **FASCICULE DE BREVET EUROPEEN**

(45) Date de publication et mention de la délivrance du brevet:
**02.11.2016 Bulletin 2016/44**

(21) Numéro de dépôt: **08835210.9**

(22) Date de dépôt: **02.09.2008**

(51) Int Cl.:
***F25B 49/04*** *(2006.01)*

(86) Numéro de dépôt international:
**PCT/FR2008/051562**

(87) Numéro de publication internationale:
**WO 2009/044034 (09.04.2009 Gazette 2009/15)**

(54) **PROCEDE DE CALCUL ET DE REGULATION DE LA CONCENTRATION DE FLUIDE ABSORBANT DANS UN DISPOSITIF DE CLIMATISATION PAR ABSORPTION, ET DISPOSITIF DE CLIMATISATION PAR ABSORPTION POUR LA MISE EN OEUVRE D'UN TEL PROCEDE**

VERFAHREN ZUR BERECHNUNG UND ANPASSUNG DER KONZENTRATION EINER ABSORPTIONSFLÜSSIGKEIT IN EINER ABSORPTIONSKLIMAANLAGE UND ABSORPTIONSKLIMAANLAGE ZUR UMSETZUNG DIESES VERFAHRENS

METHOD FOR CALCULATING AND ADJUSTING THE CONCENTRATION OF ABSORBING FLUID IN AN ABSORPTION AIR CONDITIONING DEVICE, AND ABSORPTION AIR CONDITIONING DEVICE FOR IMPLEMENTING SAID METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.09.2007 FR 0757841**

(43) Date de publication de la demande:
**09.06.2010 Bulletin 2010/23**

(73) Titulaire: **Peugeot Citroën Automobiles SA**
**78140 Vélizy-Villacoublay (FR)**

(72) Inventeurs:
• **BOUDARD, Emmanuel**
**F-78960 Voisins le Bretonneux (FR)**
• **MARCAIS, Philippe**
**F-92400 Courbevoie (FR)**

• **BERGER, Julien**
**F-75015 Paris (FR)**
• **BRUZZO, Vital**
**36040 Vicenza (IT)**

(74) Mandataire: **Fernandez, Francis Lionel**
**PSA Peugeot Citroën Automobiles SA.**
**Propriété Industrielle (LG081)**
**18, Rue des Fauvelles**
**92250 La Garenne-Colombes (FR)**

(56) Documents cités:
| JP-A- 7 280 384 | JP-A- 11 230 633 |
| JP-A- 54 131 160 | JP-A- 58 096 963 |
| JP-A- 59 086 876 | JP-A- 61 143 665 |
| JP-A- 62 069 074 | JP-A- 62 155 478 |
| US-A- 5 477 696 | US-A- 5 586 447 |

EP 2 193 316 B1

## Description

La présente invention concerne un procédé de calcul et de régulation - appelé aussi « procédé de contrôle » dans le présent texte - de la concentration de fluide absorbant, par exemple de bromure de lithium, dans un dispositif de climatisation par absorption.

La présente invention concerne également un dispositif de climatisation par absorption pour la mise en oeuvre d'un tel procédé.

Enfin, la présente invention concerne un véhicule, en particulier un véhicule automobile, équipé d'un tel dispositif de climatisation par absorption.

Un dispositif de climatisation par absorption comprend schématiquement un élément dans lequel s'effectue la désorption, désigné « désorbeur » dans la suite du texte, un absorbeur, un condenseur et un évaporateur. Pour fonctionner, le désorbeur et l'absorbeur sont remplis d'un mélange d'au moins deux substances miscibles formé par un fluide réfrigérant et un fluide absorbant. Ce mélange est combiné dans l'absorbeur, dans lequel l'absorption du fluide réfrigérant par le fluide absorbant a lieu. Le fluide réfrigérant et le fluide absorbant ont une pression d'évaporation suffisamment différente pour que, lorsque le désorbeur est chauffé, le plus volatil des deux, soit le fluide réfrigérant, s'évapore et se transforme en un liquide dans le condenseur.

Le désorbeur reçoit de la chaleur, et cet apport extérieur permet l'évaporation du fluide réfrigérant liquide du mélange. Ce fluide réfrigérant est ensuite condensé dans le condenseur par refroidissement. Le liquide obtenu est détendu et évaporé dans l'évaporateur et produit ainsi le froid de la climatisation. L'absorbeur permet à la solution de fixer les molécules de fluide réfrigérant et, de cette façon, de maintenir une pression basse et, par conséquent, une température d'évaporation basse. La réaction solution / fluide réfrigérant est exothermique. Il faut, par conséquent, refroidir la solution de l'absorbeur pour qu'elle conserve son pouvoir absorbant.

JP-54131160 , US-5477696 et US-5586447 divulguent un procédé selon le préambule de la revendication 1 et un dispositif selon le préambule de la revendication 7.

Un premier but de la présente invention est de fournir un procédé de calcul et de régulation de la concentration de cette solution, c'est-à-dire de la concentration de fluide absorbant, qui permette de garantir, dans toute la boucle de climatisation, une bonne maîtrise du risque de cristallisation de ladite solution.

Un autre but de la présente invention est de fournir un tel procédé, qui soit plus rapide et aussi précis que les procédés de régulation connus de l'art antérieur.

Un autre but de la présente invention est de fournir un tel procédé, qui apporte une meilleure réactivité au dispositif de climatisation que celle offerte par les solutions techniques existantes.

C'est également un but de la présente invention de fournir un dispositif de climatisation par absorption pour la mise en oeuvre d'un tel procédé, dans lequel le risque de cristallisation du fluide absorbant est parfaitement géré, dans toute la boucle de climatisation.

Enfin, c'est aussi un but de la présente invention de fournir un véhicule, en particulier un véhicule automobile, équipé d'un tel dispositif de climatisation par absorption à régulation de la concentration de fluide absorbant.

Pour parvenir à ces buts, la présente invention conçoit un nouveau procédé de contrôle de la concentration de fluide absorbant d'une climatisation par absorption comprenant un désorbeur, un condenseur, un évaporateur et un absorbeur, et ce nouveau procédé comprend les étapes suivantes, prises en combinaison:

- on calcule la concentration de la solution de fluide absorbant en sortie du désorbeur, et
- on compare la concentration calculée à une valeur critique prédéterminée, et si la concentration calculée s'approche de ladite valeur critique prédéterminée, on augmente la perte de charge dans le conduit reliant le désorbeur au condenseur, ce qui provoque l'arrêt de la condensation dans le condenseur et entraîne une augmentation de la pression dans le désorbeur qui vient stopper la désorption et l'augmentation de la concentration, la perte de charge étant par contre diminuée pour relancer la désorption lorsque la concentration calculée s'éloigne de la valeur critique prédéterminée.

Selon le mode préféré de réalisation de l'invention, on calcule la concentration de la solution de fluide absorbant en sortie du désorbeur en mesurant, d'une part, la pression de vapeur de réfrigérant dans le désorbeur et simultanément, d'autre part, la température de la solution de fluide absorbant en sortie du désorbeur.

Selon le mode préféré de réalisation de l'invention également, le calcul de la concentration au temps t est obtenu en utilisant la concentration au temps t-1, et en calculant un correcteur de concentration déterminant la variation de concentration entre t-1 et t, ledit calcul de correcteur utilisant les valeurs des mesures de pression du réfrigérant et de température de la solution au temps t.

Le procédé selon la revendication 3, caractérisé en ce que le calcul de la concentration au temps t répond à la formule suivante:

$$X_i = X_{i-1} - \frac{f(X_i)}{f'(X_i)}$$

dans laquelle:

$$f(X) = A(X) \cdot t_a + B(X) - t_g$$

Avec:

$$A(X) = A_3 \cdot X^3 + A_2 \cdot X^2 + A_1 \cdot X + A_0$$

$$B(X) = B_3 \cdot X^3 + B_2 \cdot X^2 + B_1 \cdot X + B_0$$

Et:

$$f'(X) = \frac{dA(X)}{dX} \cdot t_a + \frac{dB(X)}{dX}$$

$$\frac{dA(X)}{dX} = 3 \cdot A_3 \cdot X^2 + 2 \cdot A_2 \cdot X + A_1$$

$$\frac{dB(X)}{dX} = 3 \cdot B_3 \cdot X^2 + 2 \cdot B_2 \cdot X + B_1$$

Et $A_i$, $B_i$ (i allant de 0 à 3) sont des constantes propres au fluide absorbant utilisé (bromure de lithium, par exemple).

De manière préférentielle, on augmente ou diminue la perte de charge dans le conduit reliant le désorbeur au condenseur en actionnant une vanne, par exemple une vanne papillon, disposée à l'intérieur dudit conduit.

De préférence, mais de façon non limitative de l'objet de la présente invention, le fluide absorbant est du bromure de lithium, et les constantes $A_i$, $B_i$ (i allant de 0 à 3) ont des valeurs données expérimentalement et propres à ce type de fluide.

Le fluide réfrigérant est, de préférence, l'eau.

La présente invention fournit également un dispositif de climatisation par absorption pour la mise en oeuvre du procédé conforme à celui décrit ci-dessus dans ses grandes lignes. Ce dispositif comprend, de manière classique, un désorbeur, un condenseur, un évaporateur et un absorbeur. Mais, le désorbeur de ce nouveau dispositif comporte un capteur de pression pour la mesure de la pression de la vapeur de réfrigérant à l'intérieur dudit désorbeur, un capteur de température de la solution de fluide absorbant en sortie du désorbeur. De plus, ce nouveau dispositif comporte un moyen pour faire varier la perte de charge dans le conduit menant la vapeur de fluide réfrigérant vers le condenseur.

De préférence, le moyen pour faire varier la perte de charge dans le conduit menant la vapeur de fluide réfrigérant vers le condenseur est une vanne de régulation, de type vanne papillon.

Selon le mode préféré de réalisation, le désorbeur du dispositif comporte un système d'échange thermique principal de type système à plaques, situé au dessus d'un réservoir de solution de fluide absorbant, et un échangeur à plaques pour réchauffer la solution allant dans le système d'échange thermique principal avec la solution descendante provenant du réservoir de solution.

De plus, un système de chauffage additionnel de la solution, de type résistance électrique, peut baigner dans le réservoir de solution.

Enfin, l'invention fournit un véhicule, de préférence un véhicule automobile, caractérisé en ce qu'il comporte un dispositif de climatisation par absorption du type conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels:

- la figure 1 représente, de manière schématique, le principe de fonctionnement et les éléments constitutifs d'un dispositif de climatisation par absorption,
- la figure 2 représente, de manière schématique également, le désorbeur du dispositif de climatisation par absorption de la figure 1.
- la figure 3 illustre, de manière schématique, le principe général de conception d'un désorbeur, et
- la figure 4 représente, de manière schématique, le principe général de conception d'un désorbeur selon la présente invention,

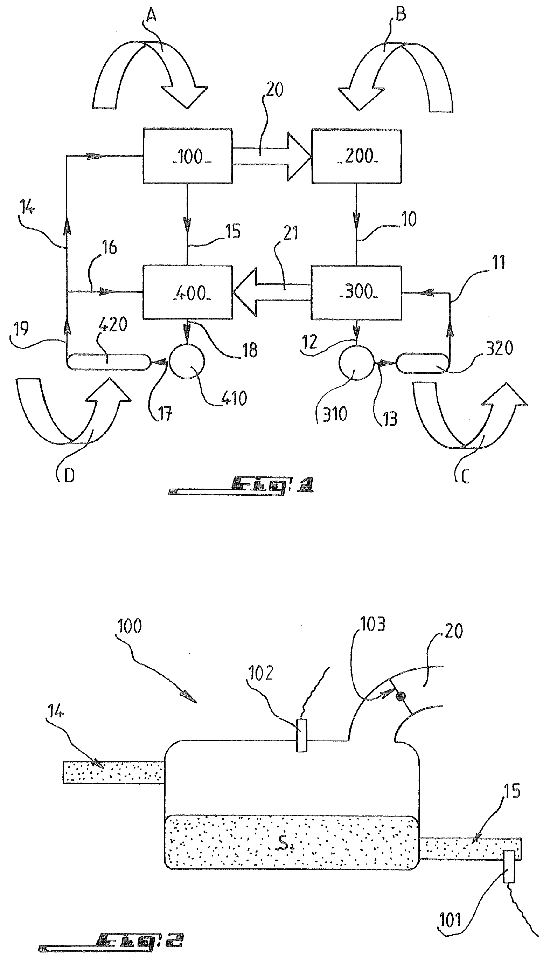

En référence au dessin de la figure 1, on a représenté, de manière schématique, les éléments constitutifs et le principe de fonctionnement d'un dispositif de climatisation par absorption. Il comprend, de manière classique, un désorbeur 100, un condenseur 200, un évaporateur 300 et un absorbeur 400. Le liquide de refroidissement moteur du véhicule apporte (apport illustré schématiquement par la flèche A) la chaleur nécessaire à la séparation d'un fluide réfrigérant, par exemple de la vapeur d'eau, et d'un fluide absorbant ou solution saline, par exemple une solution de bromure de lithium (LiBr).

L'eau sous forme de vapeur est alors amenée par la canalisation 20 dans le condenseur 200 pour être condensée par l'action de refroidissement de l'air extérieur (apport de refroidissement schématiquement illustré par la flèche B). L'eau en phase liquide est amenée par la canalisation 10 dans l'évaporateur 300. Le froid produit lors de l'évaporation est transmis à l'habitacle du véhicule (non représenté), comme schématiquement illustré par la flèche C. A cette fin, il est prévu une pompe 310 et un aérotherme 320, qui sont reliés à l'évaporateur 300 par les canalisations 11, 12 et 13. L'ensemble des canalisations 10 à 13 forme le circuit d'eau sous phase liquide. La vapeur d'eau qui sort de l'évaporateur 300 est amenée dans l'absorbeur 400 par la canalisation 21. La solution est refroidie par de l'air extérieur pour absorber la vapeur d'eau (apport de refroidissement schématiquement illustré par la flèche D). A cette fin, il est prévu une pompe 410 et un radiateur 420, qui sont reliés à l'absorbeur 400 par les canalisations 16, 17, 18 et 19. L'absorbeur 400 est relié au désorbeur 100 par les canalisations 14, 15 et 16. L'ensemble des canalisations 14 à 19 forme le circuit de solution saline.

La figure 2 représente, de manière très schématique, le désorbeur 100, avec son entrée 14 et sa sortie 15 pour la solution saline, et sa canalisation 20 d'évacuation de la phase vapeur de réfrigérant menant vers le condenseur 200.

La concentration de la solution S en sortie du désorbeur 100 est la plus élevée de tout le circuit du dispositif de climatisation.

Par concentration de la solution, désignée X, on entend le rapport entre la masse de fluide absorbant (bromure de lithium, par exemple) et la masse totale du mélange des deux fluides absorbant et réfrigérant.

Selon le procédé de la présente invention, la concentration de fluide absorbant est déterminée à partir des deux mesures physiques suivantes:

- la mesure de la pression P de vapeur de réfrigérant dans le désorbeur 100 au moyen du capteur de pression 102, et
- la mesure de la température ($t_s$) de la solution S en sortie 15 du désorbeur 100 au moyen de la sonde de température 101.

Calcul de la concentration

La concentration X est liée à la température de réfrigérant (eau) $t_e$ et à la température de la solution $t_s$ par la relation, désignée $R_1$, suivante:

$$t_e = \frac{t_s - \sum_{i=0}^{3} B_i \cdot X^i}{\sum_{i=0}^{3} A_i \cdot X^i}$$

Dans laquelle, les constantes ont les valeurs suivantes :

| A0 | -2,007550E+00 | B0 | 1,249370E+02 |
|---|---|---|---|
| A1 | 1,697600E-01 | B1 | -7,712490E+00 |
| A2 | 3,133362E-03 | B2 | 1,522880E-01 |
| A3 | 1,976680E-05 | B3 | 7,950900E-04 |

Les vapeurs de réfrigérant extraites du désorbeur 100 sont à l'état saturé. Par conséquent, il est possible de relier la pression P mesurée à une température de réfrigérant $t_e$.

On utilise, par exemple, la formule suivante:

$$\log(P) = C + \frac{D}{t_e + 273.15} + \frac{E}{(t_e + 273.15)^2}$$

Avec P en kPa (kilo Pascal) et $t_e$ en °C, on a la relation, désignée $R_2$, suivante:

$$t_e = \frac{-D + \sqrt{D^2 - 4 \cdot (C - \log(P)) \cdot E}}{2 \cdot (C - \log(P))} - 273.15$$

dans laquelle les constantes ont les valeurs suivantes:

| C | 7,05 |
|---|---|
| D | - 1596,49 |
| E | -104095,5 |

De la relation $R_1$ exposée précédemment, on tire:

$$\sum_{i=0}^{3} t_e \cdot A_i \cdot X^i - t_s + \sum_{i=0}^{3} B_i \cdot X^i = 0$$

$$\sum_{i=0}^{3} (t_e \cdot A_i + B_i) \cdot X^i - t_s = 0$$

$$(t_e \cdot A_3 + B_3) \cdot X^3 + (t_e \cdot A_2 + B_2) \cdot X^2 + (t_e \cdot A_1 + B_1) \cdot X + (t_e \cdot A_0 + B_0 - t_s) = 0$$

<u>Résolution de l'équation.</u>

La température $t_e$ est calculée à l'aide de la mesure de pression et de la relation désignée $R_2$ exposée précédemment. La température $t_s$ est la température de la solution S en sortie 15 du désorbeur 100.

La résolution de l'équation R1 s'effectue usuellement selon une méthode itérative. Il faut, en général, trois itérations pour converger vers la solution recherchée. L'intérêt de la méthode présentée est de ne réaliser qu'une seule itération en prenant pour concentration de départ celle déterminée au temps t-1.

On a, par conséquent, une seule équation à résoudre de type:

$$X_i = f(X_{i-1}, P, t_s) \text{ ou } X_i = f(X_{i-1}, t_e, t_s)$$

Si on utilise une formule de type Newton, par exemple, on obtient une formule $R_1$ équivalente à :

$$f(X) = A(X) \cdot t_s + B(X) - t_s$$

Avec :

$$A(X) = A_3 \cdot X^3 + A_2 \cdot X^2 + A_1 \cdot X + A_0$$

$$B(X) = B_3 \cdot X^3 + B_2 \cdot X^2 + B_1 \cdot X + B_0$$

Et:

$$f'(X) = \frac{dA(X)}{dX} \cdot t_s + \frac{dB(X)}{dX}$$

$$\frac{dA(X)}{dX} = 3 \cdot A_3 \cdot X^2 + 2 \cdot A_2 \cdot X + A_1$$

$$\frac{dB(X)}{dX} = 3 \cdot B_3 \cdot X^2 + 2 \cdot B_2 \cdot X + B_1$$

$X_{t-1}$ est la concentration au temps d'acquisition t-1

$$X_t = X_{t-1} - \frac{f(X_t)}{f'(X_t)}$$

On notera que le calcul de f (X) et de f' (X) utilise la concentration au temps t-1 et les mesures de pression P du réfrigérant et de température $t_s$ de la solution au temps t.

En réalité, on ne calcule qu'un correcteur de concentration qui détermine la variation de concentration en fonction des nouvelles valeurs de pression et de température mesurées.

On fixe la concentration de la solution au temps t = 0 comme l'on souhaite. Par exemple, on fixe $X_{t=0}$ = 60%.

La concentration de la solution au temps t = 0 peut également être fixée en fonction de la stratégie d'arrêt utilisée. Par exemple, si l'on a visé, lors du dernier arrêt, une concentration cible de 58%, la concentration à t = 0 sera fixée à 58%.

Régulation de la concentration.

Le calcul de la concentration, tel que décrit ci-dessus, permet de maîtriser le risque de cristallisation de la solution saline (LiBr).

Selon la présente invention, la régulation de la concentration est fondée sur la maîtrise de la condensation.

Si la concentration calculée s'approche d'une valeur critique prédéterminée, on augmente la perte de charge dans le conduit menant au condenseur 200 en actionnant, par exemple, une vanne papillon 103, représentée schématiquement sur la figure 2 en position de fermeture maximale. L'arrêt de la condensation entraîne une augmentation de la pression dans le désorbeur. Cette augmentation de la pression vient stopper la désorption et l'augmentation de la concentration. Inversement, lorsque la concentration s'est éloignée de la zone critique, on diminue la perte de charge pour relancer la désorption.

Conception du désorbeur

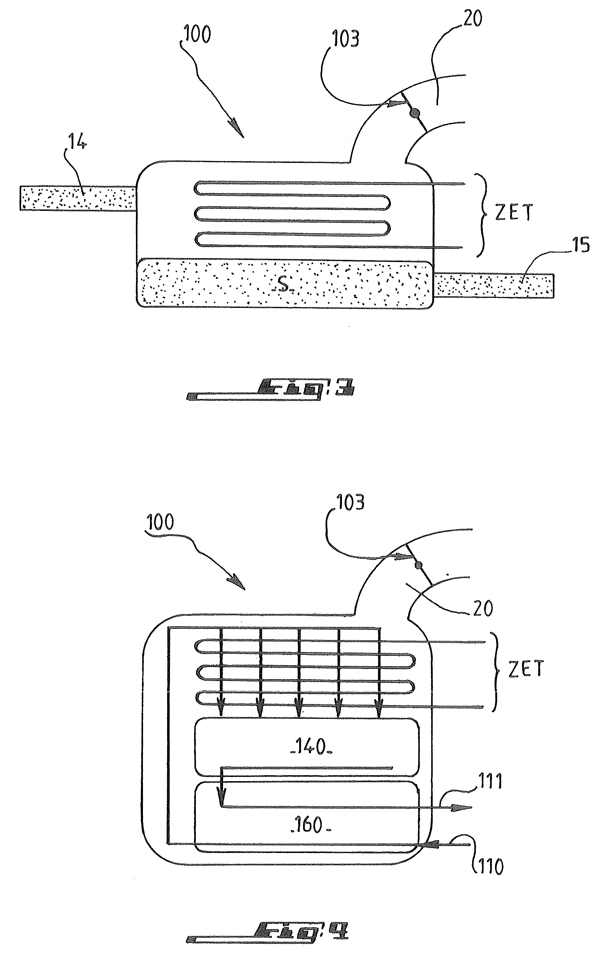

En référence au dessin de la figure 3, le désorbeur 100 possède un niveau de réserve minimal en dessous de la zone d'échange thermique référencée ZET. Lorsque l'on arrête le fonctionnement du dispositif, la réserve du désorbeur atteint ce niveau minimal. Ainsi, on diminue l'inertie thermique du système de chauffe et on améliore la montée en température de l'ensemble de la boucle lors de la remise en marche du dispositif.

On utilise la vanne de régulation de la performance du désorbeur, déjà mentionnée précédemment, référencée 103 et située dans la canalisation 20 entre le désorbeur 100 et le condenseur 200.

De manière préférentielle, et en référence à la figure 4, on utilise un désorbeur 100, compact, assumant trois fonctions.

Un échangeur à plaques 160 est incorporé à l'intérieur du désorbeur 100. L'échangeur 160 a pour fonction de réchauffer la solution allant dans la zone d'échange principale ZET avec la solution descendante provenant du réservoir de solution 140. Le réservoir de solution 140 est entièrement séparé du système de chauffe principal par le liquide de refroidissement du moteur. On peut donc s'affranchir d'un « by-pass » de l'eau chaude nécessaire pour permettre une montée rapide en température du moteur.

Le circuit de solution est représenté par les lignes fléchées de l'entrée 110 à la sortie 111 de la solution.

Un système de chauffage additionnel de la solution, de type résistance électrique, non représenté sur la figure 4, peut baigner dans le réservoir de solution 140.

Le système d'échange principal ZET est un système de type à plaques permettant un compactage suffisant du dispositif.

La vanne 103, située dans la canalisation 20 menant au condenseur, permet de réguler la concentration plus rapidement que par régulation de la puissance apportée au désorbeur 100. La vanne 103 permet également de s'affranchir d'une régulation de la capacité d'échange du condenseur 200.

Si la pression dans le condenseur 200 est très faible, il y a un risque que le réfrigérant ne puisse pas circuler du condenseur 200 vers la réserve de réfrigérant de l'absorbeur 400. En effet, sur un véhicule automobile, on ne peut pas garantir dans tous les cas de fonctionnement une différence de niveau compatible avec un écoulement gravitaire entre la zone de condensation et la zone d'évaporation. Avec la solution de la présente invention, on peut ouvrir brièvement la vanne 103 pour faire augmenter la pression dans le condenseur et, de cette façon, « pousser » le réfrigérant dans la boucle d'absorbeur.

L'invention décrite ci-dessus présente de nombreux avantages, parmi lesquels les avantages suivants:

Le procédé de calcul de la concentration de la solution absorbante exposé ci-dessus est plus rapide et aussi précis que les procédés de calcul de concentration des solutions connues de l'art antérieur.

Le procédé de calcul de l'invention permet de gérer le risque de cristallisation du fluide absorbant, le bromure de lithium par exemple, dans toute la boucle de climatisation.

La régulation de la concentration par la maîtrise de la condensation apporte au système une meilleure réactivité. En effet, les solutions techniques connues de l'art antérieur consistent généralement à réduire l'apport énergétique au désorbeur par actionnement d'une vanne qui règle le débit d'eau chaude entrante. Ces solutions, du fait des inerties thermiques mises en jeu, sont beaucoup moins efficaces que la solution de l'invention qui propose un arrêt de la condensation, lequel arrêt a un effet quasi-immédiat. De plus, pour une application automobile, les performances de la façade avant (et par conséquent du condenseur) peuvent fortement varier. La mise en place d'une vanne de régulation entre le désorbeur et le condenseur, conformément à la présente invention, permet d'isoler le condenseur du reste de la boucle de climatisation.

Bien entendu, la présente invention n'est pas limitée au mode de réalisation décrit ci-dessus à titre d'exemple ; d'autres modes de réalisation peuvent être conçus par l'homme de métier sans sortir du cadre et de la portée de la présente invention.

**Revendications**

1.  Procédé de contrôle de la concentration de fluide absorbant d'une climatisation par absorption comprenant un désorbeur (100), un condenseur (200), un évaporateur (300) et un absorbeur (400), **caractérisé en ce qu'**elle comprend les étapes suivantes, prises en combinaison:

    - on calcule la concentration de la solution de fluide absorbant en sortie du désorbeur (100), et
    - on compare la concentration calculée à une valeur critique prédéterminée, et si la concentration calculée s'approche de ladite valeur critique prédéterminée, on augmente la perte de charge dans le conduit (20) reliant le désorbeur (100) au condenseur (200), ce qui provoque l'arrêt de la condensation dans le condenseur (200) et entraîne une augmentation de la pression dans le désorbeur (100) qui vient stopper la désorption et l'augmentation de la concentration, la perte de charge étant par contre diminuée pour relancer la désorption lorsque la concentration calculée s'éloigne de la valeur critique prédéterminée.

2. Procédé selon la revendication 1, **caractérisé en ce qu'**on calcule la concentration de la solution de fluide absorbant en sortie du désorbeur (100) en mesurant, d'une part, la pression (P) de vapeur de réfrigérant dans le désorbeur (100) et simultanément, d'autre part, la température ($t_s$) de la solution de fluide absorbant en sortie du désorbeur (100).

3. Procédé selon la revendication 2, **caractérisé en ce que** le calcul de la concentration au temps t est obtenu en utilisant la concentration au temps t-1, et en calculant un correcteur de concentration déterminant la variation de concentration entre t-1 et t, ledit calcul de correcteur utilisant les valeurs des mesures de pression (P) du réfrigérant et de température ($t_s$) de la solution au temps t.

4. Procédé selon la revendication 3, **caractérisé en ce que** le calcul de la concentration au temps t répond à la formule suivante:

$$X_j = X_{j-1} - \frac{f(X_j)}{f'(X_j)}$$

dans laquelle:

$$f(X) = A(X) \cdot t_s + B(X) - t_s$$

Avec :

$$A(X) = A_3 \cdot X^3 + A_2 \cdot X^2 + A_1 \cdot X + A_0$$

$$B(X) = B_3 \cdot X^3 + B_2 \cdot X^2 + B_1 \cdot X + B_0$$

Et:

$$f'(X) = \frac{dA(X)}{dX} \cdot t_s + \frac{dB(X)}{dX}$$

$$\frac{dA(X)}{dX} = 3 \cdot A_3 \cdot X^2 + 2 \cdot A_2 \cdot X + A_1$$

$$\frac{dB(X)}{dX} = 3 \cdot B_3 \cdot X^2 + 2 \cdot B_2 \cdot X + B_1$$

Et $A_i$, $B_i$ (i allant de 0 à 3) sont des constantes propres au fluide absorbant utilisé.

5. Procédé selon l'une quelconque des revendications 1 à 4, **caractérisé en ce qu'**on augmente ou diminue la perte de charge dans le conduit (20) reliant le désorbeur (100) au condenseur (200) en actionnant une vanne (103) disposée à l'intérieur dudit conduit (20).

6. Procédé selon l'une quelconque des revendications 1 à 5, **caractérisé en ce que** le fluide absorbant est du bromure de lithium, et les constantes $A_i$, $B_i$ (i allant de 0 à 3) ont les valeurs suivantes:

| A0 | -2,007550E+00 | B0 | 1,249370E+02 |
|---|---|---|---|
| A1 | 1,697600E-01 | B1 | -7,712490E+00 |
| A2 | 3,133362E-03 | B2 | 1,522860E-01 |
| A3 | 1,976680E-05 | B3 | 7,950900E-01 |

7. Dispositif de climatisation par absorption pour la mise en oeuvre du procédé conforme à l'une quelconque des revendications 1 à 6, qui comprend un désorbeur (100), un condenseur (200), un évaporateur (300) et un absorbeur (400), **caractérisé en ce que** ledit désorbeur (100) comporte un capteur de pression (102) pour la mesure de la pression (P) de la vapeur de réfrigérant à l'intérieur dudit désorbeur (100), un capteur de température (101) pour la mesure de la température de la solution ($t_s$) de fluide absorbant en sortie (15) du désorbeur (100), et un moyen pour faire varier la perte de charge dans le conduit (20) menant la vapeur de fluide réfrigérant vers le condenseur (200).

8. Dispositif selon la revendication 7, **caractérisé en ce que** ledit moyen pour faire varier la perte de charge dans le conduit (20) menant la vapeur de fluide réfrigérant vers le condenseur (200) est une vanne de régulation (103), de type vanne papillon.

9. Dispositif selon l'une quelconque des revendications 7 et 8, **caractérisé en ce que** le désorbeur (100) comporte un système d'échange thermique principal (ZET) de type système à plaques, situé au dessus d'un réservoir de solution (140) de fluide absorbant et un échangeur à plaques (160) pour réchauffer la solution allant dans le système d'échange thermique principal (ZET) avec la solution descendante provenant du réservoir de solution (140).

10. Dispositif selon la revendication 9, **caractérisé en ce qu'**un système de chauffage additionnel de la solution, de type résistance électrique, baigne dans le réservoir de solution (140).

11. Véhicule, de préférence véhicule automobile, **caractérisé en ce qu'**il comporte un dispositif de climatisation par absorption du type conforme à l'une quelconque des revendications 7 à 10.

**Patentansprüche**

1. Verfahren zur Kontrolle der Konzentration einer Absorptionsflüssigkeit einer Absorptionsklimaanlage, umfassend einen Desorber (100), einen Kondensator (200), einen Verdampfer (300) und einen Absorber (400), **dadurch gekennzeichnet, dass** es die folgenden Schritte in Kombination umfasst:

- Berechnen der Konzentration der Absorptionsflüssigkeit am Ausgang des Desorbers (100), und
- Vergleichen der berechneten Konzentration mit einem vorbestimmten kritischen Wert, und wenn sich die berechnete Konzentration dem vorbestimmten kritischen Wert annähert, Erhöhen des Lastverlustes in der Leitung (20), die den Desorber (100) mit dem Kondensator (200) verbindet, was zur Einstellung der Kondensation in dem Kondensator (200) führt und eine Erhöhung des Drucks in dem Desorber (100) hervorruft, die die Desorption und die Erhöhung der Konzentration stoppt, wobei der Lastverlust hingegen verringert wird, um die Desorption wieder zu starten, wenn sich die berechnete Konzentration vom vorbestimmten kritischen Wert entfernt.

2. Verfahren nach Anspruch 1, **dadurch gekennzeichnet, dass** die Konzentration der Absorptionsflüssigkeitslösung am Ausgang des Desorbers (100) berechnet wird, wobei einerseits der Kühlflüssigkeitsdampfdruck (P) in dem Desorber (100) und gleichzeitig andererseits die Temperatur ($t_s$) der Absorptionsflüssigkeitslösung am Ausgang des Desorbers (100) gemessen werden.

3. Verfahren nach Anspruch 2, **dadurch gekennzeichnet, dass** die Berechnung der Konzentration zur Zeit t erhalten wird, wobei die Konzentration zur Zeit t-1 verwendet wird, und wobei ein Konzentrationskorrekturwert berechnet wird, der die Konzentrationsvariation zwischen t-1 und t bestimmt, wobei die Berechnung des Korrekturwerts die Werte der Druckmessung (P) der Kühlflüssigkeit und der Temperaturmessung (t$_s$) der Lösung zur Zeit t verwendet.

4. Verfahren nach Anspruch 3, **dadurch gekennzeichnet, dass** die Berechnung der Konzentration zur Zeit t der folgenden Formel entspricht:

$$X_i = X_{i-1} - \frac{f(X_i)}{f'(X_i)}$$

wobei:

$$f(X) = A(X) \cdot t_s + B(X) - t_s$$

mit:

$$A(X) = A_3 \cdot X^3 + A_2 \cdot X^2 + A_1 \cdot X + A_0$$

$$B(X) = B_3 \cdot X^3 + B_2 \cdot X^2 + B_1 \cdot X + B_0$$

und:

$$f'(X) = \frac{dA(X)}{dX} \cdot t_s + \frac{dB(X)}{dX}$$

$$\frac{dA(X)}{dX} = 3 \cdot A_3 \cdot X^2 + 2 \cdot A_2 \cdot X + A_1$$

$$\frac{dB(X)}{dX} = 3 \cdot B_3 \cdot X^2 + 2 \cdot B_2 \cdot X + B_1$$

wobei A$_i$, B$_i$ (wobei i von 0 bis 3 geht) Konstanten sind, die der verwendeten Absorptionsflüssigkeit eigen sind.

5. Verfahren nah einem der Ansprüche 1 bis 4, **dadurch gekennzeichnet, dass** der Lastverlust in der Leitung (20), die den Desorber (100) mit dem Kondensator (200) verbindet, erhöht oder verringert wird, wobei ein Ventil (103) betätigt wird, das im Inneren der Leitung (20) angeordnet ist.

6. Verfahren nach einem der Ansprüche 1 bis 5, **dadurch gekennzeichnet, dass** die Absorptionsflüssigkeit Lithiumbromid ist und die Konstanten A$_i$, B$_i$ (wobei i von 0 bis 3 geht) die folgenden Werte haben:

| A0 | -2,007550E+00 | B0 | 1,249370E+02 |
|----|---------------|----|--------------|
| A1 | 1,697600E-01 | B1 | -7,712490E+00 |

(fortgesetzt)

| A2 | 3,133362E-03 | B2 | 1,522880E-01 |
| A3 | 1,876680E-05 | B3 | 7,950900E-04 |

**7.** Absorptionsklimaanlage für den Einsatz des Verfahrens nach einem der Ansprüche 1 bis 6, umfassend einen Desorber (100), einen Kondensator (200), einen Verdampfer (300) und einen Absorber (400), **dadurch gekennzeichnet, dass** der Desorber (100) einen Drucksensor (102) zum Messen des Drucks (P) des Kühlflüssigkeitsdampfes innerhalb des Desorbers (100), einen Temperaturfühler (101) zum Messen der Temperatur der Lösung ($t_s$) einer Absorptionsflüssigkeit am Ausgang (15) des Desorbers (100) und ein Mittel umfasst, um den Lastverlust in der Leitung (20), die den Kühlflüssigkeitsdampf zum Kondensator (200) leitet, zu variieren.

**8.** Verfahren nach Anspruch 7, **dadurch gekennzeichnet, dass** das Mittel, um den Lastverlust in der Leitung (20), die den Kühlflüssigkeitsdampf zum Kondensator (200) leitet, ein Regelventil (103) vom Typ Drosselklappenventil ist.

**9.** Vorrichtung nach einem der Ansprüche 7 und 8, **dadurch gekennzeichnet, dass** der Desorber (100) ein Hauptwärmetauschsystem (ZET) vom Typ Plattensystem, das sich über einem Lösungsbehälter einer Absorptionsflüssigkeit (140) befindet, und einen Plattentauscher (160) umfasst, um die Lösung wieder zu erhitzen, die in das Hauptwärmetauschsystem (ZET) mit der absteigenden Lösung, die vom Lösungsbehälter (140) kommt, gelangt.

**10.** Vorrichtung nach Anspruch 9, **dadurch gekennzeichnet, dass** ein Zusatzheizsystem der Lösung vom Typ elektrischer Widerstand in dem Lösungsbehälter (140) schwimmt.

**11.** Fahrzeug, vorzugsweise Kraftfahrzeug, **dadurch gekennzeichnet, dass** es eine Absorptionsklimaanlage nach einem der Ansprüche 7 bis 10 umfasst.

**Claims**

**1.** A method for control of the concentration of absorbing fluid in an absorption air-conditioner including a desorber (100), a condenser (200), an evaporator (300) and an absorber (400), **characterized in that** it includes the following steps, taken in combination:

- calculating the concentration of the absorbing fluid solution at the output of the desorber (100), and
- comparing the concentration calculated to a predetermined critical value, and, if the calculated concentration is close to said predetermined critical value, increasing the charge loss in the duct (20) connecting the desorber (100) to the condenser (200), which causes shut-down of condensation in the condenser (200) and brings about an increase of the pressure in the desorber (100) which comes to stop the desorption and the increase of the concentration, the charge loss being decreased on the other hand to restart the desorption when the calculated concentration moves away from the predetermined critical value.

**2.** The method according to claim 1, **characterized in that** the concentration of the absorbing fluid solution is calculated at the output of the desorber (100) by measuring, on the one hand, the pressure (P) of the coolant vapour in the desorber (100) and simultaneously, on the other hand, the temperature ($t_s$) of the absorbing fluid solution at the output of the desorber (100).

**3.** The method according to claim 2, **characterized in that** the calculation of the concentration at time t is obtained by using the concentration at the time t-1, and by calculating a concentration corrector determining the variation in concentration between t-1 and t, said corrector calculation using the values of the pressure measurements (P) of the coolant and temperature ($t_s$) of the solution at the time t.

**4.** The method according to claim 3, **characterized in that** the concentration calculation at time t answers the following formula:

$$X_i = X_{i-1} - \frac{f(X_i)}{f'(X_i)}$$

in which:

$$f(X) = A(X) \cdot t_a + B(X) - t_g$$

with:

$$A(X) = A_3 \cdot X^3 + A_2 \cdot X^2 + A_1 \cdot X + A_0$$

$$B(X) = B_3 \cdot X^3 + B_2 \cdot X^2 + B_1 \cdot X + B_0$$

and:

$$f'(X) = \frac{dA(X)}{dX} \cdot t_a + \frac{dB(X)}{dX}$$

$$\frac{dA(X)}{dX} = 3 \cdot A_3 \cdot X^2 + 2 \cdot A_2 \cdot X + A_1$$

$$\frac{dB(X)}{dX} = 3 \cdot B_3 \cdot X^2 + 2 \cdot B_2 \cdot X + B_1$$

and $A_i$, $B_i$ (i going from 0 to 3) are constants pertaining to the absorbing fluid used.

5. The method according to any one of claims 1 to 4, **characterized in that** the charge loss is increased or decreased in the duct (20) connecting the desorber (100) to the condenser (200) by activating a valve (103) arranged inside the said duct (20).

6. The method according to any one of claims 1 to 5, **characterized in that** the absorbing fluid is lithium bromide, and the constants $A_i$, $B_i$ (i going from 0 to 3) have the following values:

| A0 | -2,007550E+00 | B0 | 1,249370E+02 |
|---|---|---|---|

(continued)

| A1 | 1,697600E-01 | B1 | -7,712490E+00 |
|----|--------------|----|---------------|
| A2 | 3,133362E-03 | B2 | 1,522860E-01 |
| A3 | 1,976680E-05 | B3 | 7,950900E-04 |

7. An absorption air-conditioning device for the implementation of the method according to any one of claims 1 to 6, which includes a desorber (100), a condenser (200), an evaporator (300) and an absorber (400), **characterized in that** said desorber (100) comprises a pressure sensor (102) for the measurement of the pressure (P) of the coolant vapour inside said desorber (100), a temperature sensor (101) for the measurement of the temperature of the absorbing fluid solution ($t_s$) at the output (15) of the desorber (100), and a means to vary the charge loss in the duct (20) conducting the coolant fluid vapour to the condenser (200).

8. The device according to claim 7, **characterized in that** said means to vary the charge loss in the duct (20) conducting the coolant fluid vapour to the condenser (200) is a regulation valve (103), of the butterfly valve type.

9. The device according to any one of claims 7 and 8, **characterized in that** the desorber (100) comprises a main thermal exchange system (ZET) of plate system type, located above a solution tank (140) of absorbing fluid and a plate exchanger (160) to warm the solution moving in the main thermal exchange system (ZET) with the solution coming down from the solution tank (140).

10. The device according to claim 9, **characterized in that** an additional heating system of the solution, of electric resistance type, bathes in the solution tank (140).

11. A vehicle, preferably a motor vehicle, **characterized in that** it comprises an absorption air-conditioning device of the type according to any one of claims 7 to 10.

_Fig. 1_

_Fig. 2_

Fig. 3

Fig. 4

**RÉFÉRENCES CITÉES DANS LA DESCRIPTION**

**Documents brevets cités dans la description**

- JP 54131160 B
- US 5477696 A
- US 5586447 A